Europäisches Patentamt

European Patent Office

Office européen des brevets

(19)

(11) Publication number: **0 165 623**
**B1**

(12) **EUROPEAN PATENT SPECIFICATION**

(45) Date of publication of patent specification: **17.10.90**

(51) Int. Cl.⁵: **G 06 F 7/50**

(21) Application number: **85200582.6**

(22) Date of filing: **16.04.85**

(54) **Carry select adder circuit.**

(30) Priority: **24.04.84 NL 8401308**

(43) Date of publication of application:
**27.12.85 Bulletin 85/52**

(45) Publication of the grant of the patent:
**17.10.90 Bulletin 90/42**

(84) Designated Contracting States:
**DE FR GB IT**

(56) References cited:
**US-A-3 553 446**
**US-A-3 993 891**

(73) Proprietor: **N.V. Philips' Gloeilampenfabrieken**
**Groenewoudseweg 1**
**NL-5621 BA Eindhoven (NL)**

(72) Inventor: **Persoon, Eric Hendrik Josef**
**c/o Int. Octrooibureau B.V. Prof. Holstlaan 6**
**NL-5656 AA Eindhoven (NL)**
Inventor: **Vandenbulcke, Christian Joseph**
**c/o Int. Octrooibureau B.V. Prof. Holstlaan 6**
**NL-5656 AA Eindhoven (NL)**

(74) Representative: **Faessen, Louis Marie Hubertus**
**et al**
**INTERNATIONAAL OCTROOIBUREAU B.V. 6**
**Prof. Holstlaan**
**NL-5656 AA Eindhoven (NL)**

Courier Press, Leamington Spa, England.

EP 0 165 623 B1

# EP 0 165 623 B1

**Description**

The invention relates to a full adder circuit for adding together two n-bit binary numbers, this full adder circuit comprising a plurality of cascaded sub-circuits of a first type having a plurality of bit inputs for receiving groups of bit signals having significances progressing from $m$ to $k$ wherein $m < k \leq n$, each subcircuit of a first type comprising first and second sub-circuits of a second type and a selection circuit, the first and second sub-circuits of the second type respectively receiving the logic values "0" and "1" at a carry signal input and generating at a carry signal output a provisional carry signal having a significance $k+1$, these carry signal outputs being connected to inputs of the selection circuit, a further input of which is connected to an output of a preceding sub-circuit of the first type or a subcircuit of the second type which are arranged in cascade with the relevant sub-circuit of the first type, at which output a carry signal having a first significance (m) is generated for selecting with the aid of the selection circuit a carry signal having a higher significance (k+1) from the generated carry signals and for applying the selected carry signal to a carry signal output of the sub-circuit of the first type.

Such a circuit is described in a publication disclosed during the International Solid State Conference, February 22nd 1984, pages 90, 91, 324 "A CMOS Floating Point Multiplier" by Masaru Kya. The 24 bit-full adder circuit used in the multiplier circuit comprises, arranged in cascade, sub-circuits of a first type which each comprise two parallel-operating (4, 5 or 6 biys) full adder sub-circuits of a second type, respective first and second sub-circuits of the second type receiving the logic signals "0" and "1" at their carry signal inputs. The two parallel-operating sub-circuits of the second type consequently generate complementary groups of sum signals and complementary provisional carry signals. A first real carry signal is generated by a first full adder sub-circuit of the second type from the group of least significant bits of the two numbers to be added. The first real carry signal is applied to a multiplexing circuit included in a sub-circuit of the first type which is arranged in cascade with the first full adder sub-circuit of the second type, by means of which multiplexing circuit a group of sum signals is selected from the complementary groups of sum signals applied to the multiplexing circuit. In addition, the sub-circuit of the first type comprises selection means to which the complementary provisional carry signals are applied and also the first real carry signal. By means of the last-mentioned carry signal the correct carry signal of a higher significance is selected from the two provisional carry signals, which correct carry signal in its turn is utilized as the "first real" carry signal for a subsequent sub-circuit of the first type, arranged in cascade with the first-mentioned sub-circuit of the first type. Using such a full adder circuit it is possible to add together large binary numbers (for example 24-bit numbers) in a comparatively short time.

Due to the use of the dual full adder sub-circuits of the second type and the multiplexing circuit connected thereto the circuit has the disadvantage that a comparatively large semiconductor surface is required. Moreover, the time necessary for adding together binary numbers of, for example, more than 32, e.g. 40 bits, will increase because of the increasing numbers of cascade-arranged selection means (gate circuits) required therefor.

The invention has for its object to provide a full adder circuit in which the required semiconductor surface is less than in the prior art circuit and in which in the same short time, or in an even shorter time, binary numbers (having for example 30 to 40 bits) can be added together.

A full adder circuit according to the invention is therefore characterized in that the sub-circuits of the second type are carry look-ahead circuits outputs of which are connected to the carry signal inputs of the selection circuit whose further input is connected to a carry signal input of a single full adder for adding together two bits of the significance $m$.

The use of carry look-ahead circuits is known from US—A—3,993,891, but only in combination with two adder circuits for adding each group of bits, which requires a large semiconductor area for implementing such a full-adder circuit in an integrated circuit.

A preferred full adder circuit according to the invention is characterized further in that a carry look-ahead circuit comprises at least two look-ahead sub-circuits, the consecutive look-ahead sub-circuits receiving significance-sequential sub-groups (m to l, l+1 to k) from a group of bit signals (wherein $m < l \leq k$) for generating provisional carry signals having a progressing significance, the selection means comprising a selection circuit for every two look-ahead sub-circuits producing provisional carry signals with the same significance, carry signal inputs of said selection circuit are connected to the outputs of the last-mentioned two look-ahead sub-circuits and an output of said selection circuit is connected to a carry signal input of a full adder for adding together two bits having the same associated significance, a carrying signal having a first significance generated in a preceding sub-circuit of the first type or a sub-circuit of the second type being applied to each selection circuit in a sub-circuit of the first type, for selecting a carry signal from the two provisional carry signals applied to the selection circuit.

The invention will now be described in greater detail with reference to the examples illustrated in the accompanying drawings, in which drawings:

Fig. 1 is a block circuit diagram of a first full adder circuit according to the invention;

Fiv. 2 is a more detailed circuit diagram of a second full adder circuit constituting a preferred embodiment of the invention.

Fig. 3 is a circuit diagram of a further possible construction for a portion of a full adder circuit according to the invention, and

2

Fig. 4 shows a detail of another possible construction for a portion of a full adder circuit according to the invention.

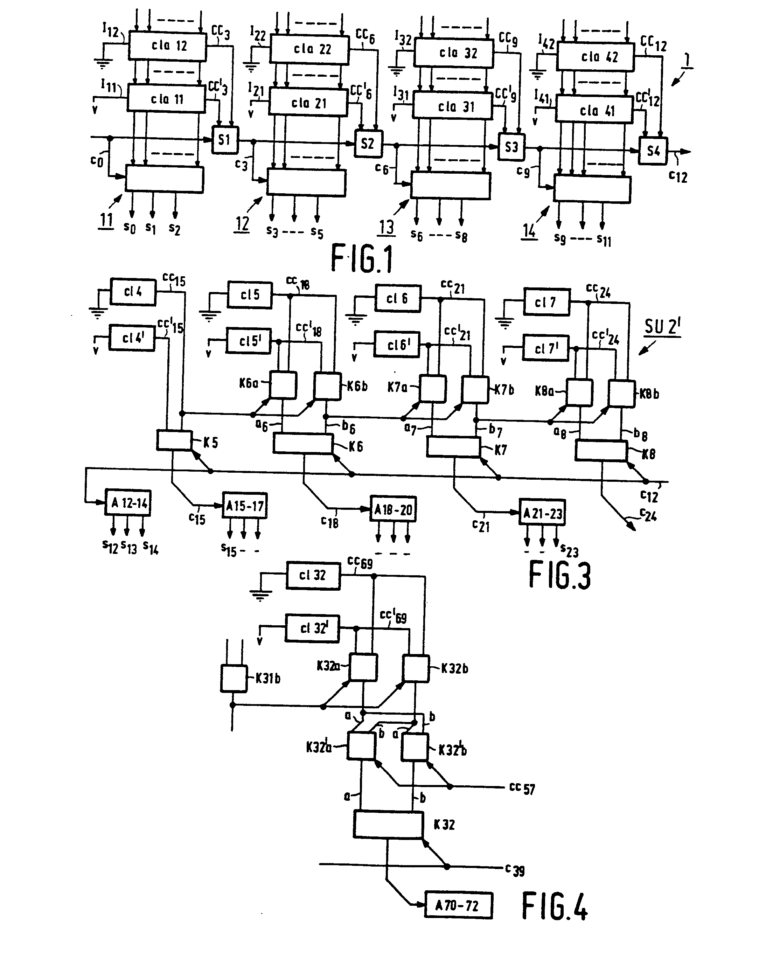

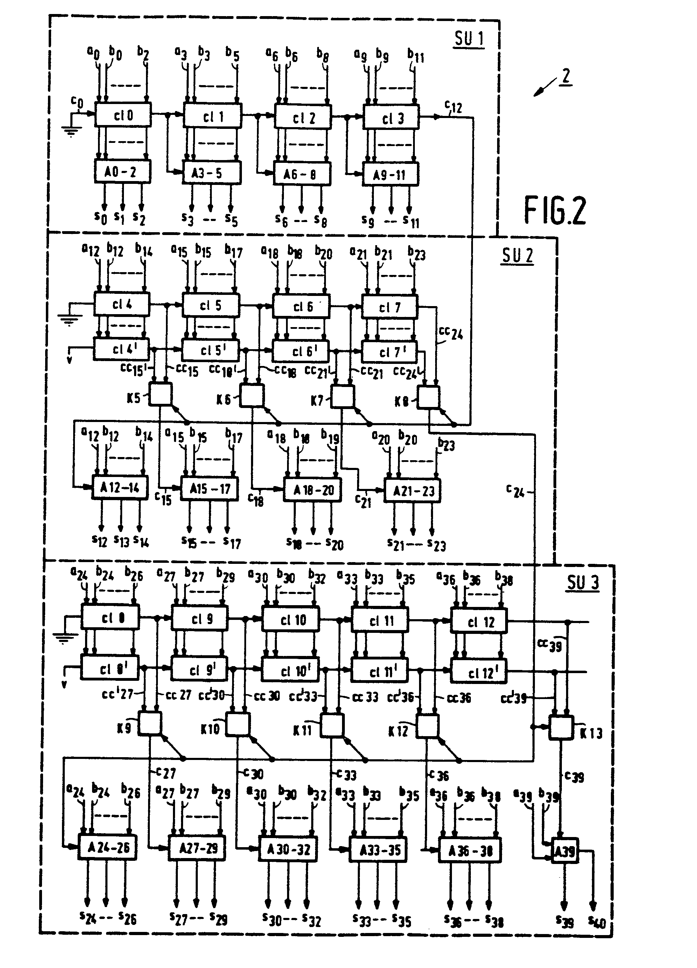

Fig. 1 is a block diagram of a 12-bit full adder circuit *1* according to the invention. The circuit *1* comprises four sub-circuits of a first type arranged in cascade. The sub-circuits of the first type each comprise two sub-circuits of a second type cla 11, 12; cla 21, 22; cla 31, 32 and cla 41, 42, a selection circuit S1, S2, S3, S4 and a group of three cascaded single-bit full adders *11, 12, 13* and *14*. In this example groups of bit signals $a_0, a_1, a_2$; $b_0, b_1, b_2...a_9, a_{10}, a_{11}$; $b_9, b_{10}, b_{11}$ are applied to the sub-circuits of the second type cla 11, 12,...41, 42 and to the full adders *11, 12, 13, 14* to determine the sum signals $s_0, s_1, s_2, s_3...s_9, s_{10}, s_{11}$ by means of the respective full adders *11, 12, 13, 14* which consequently also receive carry signals $C_0, C_3, C_6, C_9$ respectively. The carry signal $C_0$ is applied from the outside and is usually a logic "0", unless the full adder circuit 1 shown in Fig. 1 is arranged in cascade with a (similar) full adder circuit for adding together two binary numbers having a number of bits exceeding 12. The carry signals $C_3$, $C_6$ and $C_9$ (and $C_{12}$) are generated in the circuit *1*. Of two numbers A and B to be added together, three bits $a_0, b_0, a_1, b_1, a_2, b_2$, whose significance progresses from 0 to 2 are applied to the three-bit full adder 11. The full adder 12 receives the three bits $a_3, b_3,...a_5, b_5$ of a next higher significance of those numbers A and B and the full adder 13 receives the three bits $a_6, b_6,...a_8, b_8$ etc. of a next higher significance. From each pair of applied bits $\overline{a_i, b_i}$ of the same significance an inverted AND- signal $\overline{a_i \cdot b_i}$ and an inverted OR-signal $\overline{a_i+b_i}$ are formed, with which in combination with a carry signal $C_i$ a sum signal $s_i$ and a carry signal $C_{i+1}$ of a higher significance are determined. The newly generated carry signal $C_{i+1}$ is used in its turn, in combination with the inverted AND-signal and OR-signal $\overline{a_{i+1} \cdot b_{i+1}}, \overline{a_{i+1}+b_{i+1}}$ to determine a sum signal $S_{i+1}$ and a carry signal $C_{i+2}$. So as to avoid that for forming the sum signal $s_{11}$ (or $s_n$ when two n-bit numbers are added together) all the carry signals $C_i$ (i=0,...11; or i=0,...n) must first be sequentially genreated, carry look-ahead circuits cla 11, 12, 21, ...41, 42 are added to the full adders 11, 12, 13, 14. To generate the provisional carry signals $CC_3$ and $CC_3'$, the inputs $I_{11}$ and $I_{12}$ of look-ahead circuits cla 11 and cla 12 respectively receive a logic "0" level and a logic "1" level, respectively. The look-ahead circuits cla 11, 12 both receive the inverted AND-signals and OR-signals $\overline{a_i \cdot b_i}$ and $\overline{a_i+b_i}$, the index *i* having the values 0, 1 and 2. The look-ahead circuits cla 11 and 12 generate provisional carry signals $CC_3$ and $CC_3'$, which are applied to selection means S1 which is in the form of, for example, a transfer-gate or a conventional logic gate circuit. Applied to a control input of the selection means S1 is the incoming carry signal $C_0$ of significnce 0, with which one of the provisional carry signals $CC_3$ and $CC_3'$ is selected and applied as a look-ahead carry signal $C_3$ to the full adder circuit 12.

In this way the three-bit full adder 12 can already start generating sum signals $s_3, s_4$ before the sum signal $s_2$ and a carry signal have been formed *via* the preceding full adder 11. The look-ahead circuits cla 21 and 22 receive the inverted AND- and OR- signals $\overline{a_i \cdot b_i}$ and $\overline{a_i+b_i}$, the index *i* having the values 3, 4 and 5. The circuits cla 21 and 22 generate provisional carry look-ahead signals $CC_6$ and $CC_6'$, a logic "0" and a logic "1" level being applied to the carry signal inputs $I_{21}$ and $I_{22}$, respectively of the respective look-ahead circuits cla 21 and cla 22. So the provisional carry signals $CC_6$ and $CC_6'$ are generated simultaneously with the provisional carry signals $CC_3$ and $CC_3'$. With the look-ahead signal $C_3$ which is chosen with the aid of the incoming carry signal $C_0$, the look-ahead carry signal $C_6$ of the higher significance (6) is selected with the aid of the selection means S2. The look-ahead carry signal $C_6$ is generated relative to the look-ahead carry signal $C_3$ already after one "gate delay" produced by the selection means S2. The look-ahead carry signal $C_6$ is applied to the three-bit full adder *13* and also to selection means S3, with which the look-ahead carry signal $C_9$ is chosen from two provisional carry signals $CC_9$ and $CC_9'$, which are generated in a similar way to and simultaneously with the signals $CC_3, CC_3', CC_6$ and $CC_6'$ by the circuits cla 31 and 32. Thus, after only one further gate delay a look-ahead carry signal $C_9$ having significance 9 (selected *via* the selection means S3) will again be available.

Using the look-ahead carry signal $C_9$ the look-ahead carry signal $C_{12}$ is selected by means of the selection means S4 from the provisional carry signals $CC_{12}$ and $CC_{12}'$ generated in the above-described way by the look-ahead circuits cla 41 and 42.

From the foregoing it will be obvious that the sum signals $s_0, s_1, ...s_{11}$ can be generated very quickly by the full adders *11, 12, 13* and *14*, as the look-ahead carry signals $C_3, C_6, C_9$ required for the full adders *11, 12, 13, 14* are generated sequentially, each one after one further gate delay. It will be obvious that the selection means S1, S2, S3, S4 used are always formed by a two-to-one multiplex circuit, that for each group of bits two look-ahead circuits are required and for each bit only one single-bit full adder is necessary, which results in an advantageous limitation of the semiconductor surface required for the full adder circuit according to the invention. For adding together binary numbers wider than 12 bits it is merely necessary to arrange two or more of the full adder circuits *1* shown in Fig. 1 in cascade.

Fig. 2 shows a 40-bit full adder circuit *2* according to the invention. The full adder circuit *2* comprises three sub-circuits of a first type *SU1, SU2, SU3*. The first sub-circuit *SU1* comprises a cascade arrangement of four carry look-ahead circuits cl 0, 1, 2, 3 which at their inputs receive from the group of bit signals $a_0, b_0, a_1, b_1, ... a_{11}, b_{11}$ applied to sub-circuit *SU1* the respective sub-groups $a_0, b_0...b_2$; $a_3, b_3...b_5, a_6, b_6,...b_8$; $a_9, b_9...b_{11}$. The four sub-groups of bit signals are also applied to four groups of three cascade-arranged single-bit full adders A0—2 A3—5, A6—8, A9—11, respectively. At its carry signal input the carry look-ahead circuit cl 0 receives a carry signal $C_0$ which generally has the logic value "0". The sub-circuit of the first type *SU1* ia an adder circuit which is known *per se* and determines the sum signals $s_0, s_1, s_2, ...s_{11}$ and a carry signal $C_{12}$

3

from the received carry signal and the received bit signals. The carry signal $C_{12}$ is applied to the carry signal input of sub-circuit of the first type *SU2*.

The sub-circuit of the first type *SU2* comprises a first sub-circuit of the second type cl 4, cl 5, cl 6, cl 7, a second sub-circuit of the second type cl 4', cl 5', cl 6', cl 7', a selection circuit K5,, K6, K7, K8 and full adders A12—14, A15—17, A18—21, A22—24. Said sub-circuits of the second type are carry look-ahead circuits formed from cascade arrangements of look-ahead sub-circuits cl 4, cl 5, cl 6, cl 7 and cl 4', cl 5', cl 6', cl 7', respectively. In addition to the above-mentioned carry signal $C_{12}$, the sub-circuit of the first type *SU2* receives the groups of bit signals $a_{12}, a_{13}, \ldots a_{23}$ and $b_{12}, b_{13}, \ldots b_{23}$, with a significance increasing from 12 to 23 inclusive, of the two binary numbers A and B. The group of bit signals is divided into sub-groups $a_{12}, b_{12}, a_{13}, b_{13}, a_{14}, b_{14}; a_{15}, b_{15}, \ldots b_{17}; a_{18}, b_{18}, \ldots b_{20}; a_{21}, b_{21}, \ldots b_{23}$ which are applied to the respective look-ahead sub-circuits cl 4 and cl 4'; cl 5 and cl 5'; cl 6 and cl 6'; cl 7 and cl 7' and to the respective full adders A12—14, A15—17, A18—20, A21—23. The carry signal inputs of the look-ahead sub-circuit cl 4 and cl 4' receive the logic values "0" and "1", respectively. The look-ahead sub-circuits cl 4 and cl 4' generate from the bit signals $a_{12}, b_{12}, \ldots b_{14}$ applied and from the respective said logic values "0" and "1" the respective provisional carry signals $CC_{15}$ and $CC_{15}'$ with significance 15, which are applied to the carry signals inputs of the look-ahead sub-circuits cl 5 and cl 5', respectively. In addition, the provisional carry signals $CC_{15}$ and $CC_{15}'$ are applied to the selection circuit K5, which the under control of the carry signal $C_{12}$ selects a real carry signal $C_{15}$ from the provisional carry signals $CC_{15}$ and $CC_{15}'$. The carry signal $C_{15}$ is applied to the carry signal input of the full adder A15. The full adder A12 receives the carry signal $C_{12}$ and forms therewith from the bit signals $a_{12}$ and $b_{12}$ in a manner known in itself the sum signal $s_{12}$ and an (internal) carry signal for full adder A13, which forms from the bit signal $a_{13}, b_{13}$ the sum signal $s_{13}$ and also an (internal) carry signal $C_{14}$ for adder $a_{14}$, which produces the sum signal $s_{14}$. Likewise, the full adders A15—17 form the sum signals $s_{15}, s_{16}, s_{17}$ from the carry signal $C_{15}$ and the bit signals $a_{15}, b_{15}, \ldots b_{17}$.

The look-ahead sub-circuits cl 5 and cl 5' do not only receive the provisional carry signals $CC_5$ and $CC_5'$ but also the bit signals $a_{15}, b_{15}, \ldots b_{17}$ and form two provisional carry signals $CC_{18}$ and $CC_{18}'$ from them with significance 18. The provisional carry signals $CC_{18}$ and $CC_{18}'$ are applied to the selection circuit K6 and to the carry signal inputs of the look-ahead sub-circuits cl 6 and cl 6'. Using the selection circuit K6 a carry signal $C_{18}$ is selected from the two provisional carry signals $CC_{18}$ and $CC_{18}'$ under the control of the carry signal $C_{12}$, and applied to the full adders A18—20. The fully adders A18—20 produce the sum signals $s_{18}, s_{19}, s_{20}$ from the carry signal $C_{18}$ and the bit signals $a_{18}, b_{18}, \ldots b_{20}$.

The provisional carry signals $CC_{18}$ and $CC_{18}'$ are applied to the look-ahead sub-circuits cl 6 and cl 6', which receive in addition the signals $a_{18}, b_{18}, \ldots b_{20}$ and produce the provisional carry signals $CC_{21}$ and $CC_{21}'$ from the received signals. The provisional signals $CC_{21}$ and $CC_{21}'$ are applied to the selection circuit K7, which selects under the control of the entry signal $C_{12}$ a carry signal $C_{21}$ and conveys it to the full adders A21—23. The full adders A21—23 form the sum signals $s_{21}, s_{22}$ and $s_{23}$ from the carry signals $C_{21}$ and the bit signals $a_{21}, b_{21}, \ldots b_{23}$. In addition, the provisional carry signals $CC_{21}$ and $CC_{21}'$ are applied to the look-ahead sub-circuits cl 7 and cl 7', which further receive the bit signals $a_{21}, b_{21}, \ldots b_{23}$ and generate the provisional carry signals $CC_{24}$ and $CC_{24}'$ from the signals applied. The provisional carry signals $CC_{24}$ and $CC_{24}'$ are applied to the selection circuit K8 which under the control of the carry signal $C_{12}$ selects the carry signal $C_{24}$, which is applied to the subsequent sub-circuit of the first type *SU3* (*inter alia* to the full adder A24 incorporated therein).

The sub-circuit of the first type *SU3* comprises first and second sub-circuits of the second type cl 8 to cl 12 and cl 8' to cl 12', selection means in the form of selection circuits K9 to K13, the full adders A24 to A39. The sub-circuit of the first type *SU3* is substantially identical to the sub-circuit of the first type *SU2*. Four look-ahead sub-circuits cl 4 to cl 7 and cl 4' to cl 7' are always arranged in cascade in the sub-circuit of the first type *SU2*. In the sub-circuit of the first type *SU3* always five look-ahead sub-circuits cl 8 to cl 12 and cl 8' to cl 12' are arranged in cascade. The carry signal inputs of look ahead sub-circuits cl 8 and cl 8' receive a logic "0" and a logic "1" signal, respectively. In addition, the look-ahead sub-circuits cl 8 and cl 8' receive the bits signals $a_{24}, b_{24}, \ldots b_{26}$. From the signals received the look-ahead sub-circuits cl 8 and cl 8' generate provisional carry signals $CC_{27}$ and $CC_{27}'$, which are applied to both the selection circuit K9 and the look-ahead sub-circuits cl 9 and cl 9'. The latter circuits generate the provisional carry signals $CC_{30}$ and $CC_{30}'$ from the bit signals $a_{27}, b_{27}, \ldots b_{29}$ and said signals $CC_{27}$ and $CC_{27}'$. The provisional carry signals $CC_{30}$ and $CC_{30}'$ are applied to the selection circuit K10 and also to the subsequent look-ahead sub-circuits cl 10 and cl 10'. As will be obvious from the foregoing, the look-ahead sub-circuits cl 10 and cl 10' and the subsequent, similar circuits cl 11 and cl 11', cl 12 and cl 12' generate the respective provisional carry signals $CC_{33}$ and $CC_{33}'$, $CC_{36}$ and $CC_{36}'$, and $CC_{39}$ and $CC_{39}'$, pairs of which are applied to the associated selection switches K11, K12 and K13, respectively. Using the carry signal $C_{24}$, which controls the selection circuits K9 to K13, the desired carry signals $C_{27}, C_{30}, C_{33}, C_{36}$ and $C_{39}$ are selected from said carry signals $CC_{27}, CC_{27}' \ldots CC_{39}$ and applied to the full adders A24, A27, A30, A33, A36 and A39, respectively, which causes the sum signals $s_{24}, s_{25}, \ldots s_{39}$ to be generated.

Adding together two binary numbers can be effective very quickly with the above-described 40-bit full adder circuit 2. A look-ahead sub-circuit cl i ($0 \leq i \leq 12$) has, for example, a time delay of $\tau_c \approx 17$ nsec. (time elapsed between the instant at which the input signals are presented and the carry signal is produced). The selection circuits $K_j$ ($5 \leq k \leq 13$) have a time delay $\tau_s \approx 12$ nsec., whilst a three-bit full adder (for example A24—26) has a time delay of $\tau_a \approx 33$ nsec. From the different time delays it can be derived that the carry

4

signal $C_{12}$ is available after $4 \times \tau_c = 68$ nsec., that the carry signals $C_{15}$, $C_{18}$, $C_{21}$ and $C_{24}$ are available simultaneously after $4 \times \tau_c + \tau_s = 80$ nsec. that the carry signals $C_{27}$, $C_{30}$, $C_{33}$, $C_{36}$ and $C_{39}$ are available simultaneously after $4 \times \tau_c + 2 \times \tau_s = 92$ nsec., and that the sum signal $S_{38}$ is available as the last sum signal after $4 \times \tau_c + 2 \times \tau_s + \tau_a = 125$ nsec. It should be noted that the provisional signals $CC_{24}$, $CC_{24}'$ and $CC_{39}$, $CC_{39}'$ are only available after $4 \times \tau_c = 68$ nsec. and $5 \times \tau_c = 85$ nsec., respectively, which (in practice) preferably substantially coincide with the instants at which the respective controlling carry signals $C_{12}$ and $C_{24}$ become available, (for $C_{12}: \times 4 \ \tau_c = 68$ nsec., for $C_{24}: 4 \times \tau_c + \tau_s = 80$ nsec.).

Fig. 3 shows a preferred alternative sub-circuit of the first type $SU2'$ which can be substituted for the sub-circuit of the first type $SU2$ of Fig. 2 without further measures. Corresponding components in Figs. 2 and 3 have been given the same reference numerals. For the sake of clarity, Fig. 3 does not show the bit signals to be applied and the inputs for those bit signals. In the sub-circuit $SU2'$ provisional carry signals $CC_i$ and $CC_i'$ (i=15, 18, 21, 24) are generated simultaneously and are consequently all available after 27 nsec. The provisional carry signals $CC_{15}$ and $CC_{15}'$ are applied to the selection circuit K5 (which is the same situation as described with reference to Fig. 2). The provisional carry signal $CC_{15}$ is further applied to the selection switches K6b and K6a. Depending on whether the signal $CC_{15}$ has the logic value "0" or "1", the selection switches K6a and K6b apply the provisional carry signals $CC_{18}'$ or $CC_{18}$ and $CC_{18}$ or $CC_{18}'$ respectively to the respective inputs $a_6$ and $b_6$ of the selection circuit K6. The signal $CC_{18}$ or $CC_{18}'$ at the input $b_6$ of selection circuit K6 also controls the selection switches K7a and K7b, which receive the provisional signals $CC_{21}$ and $CC_{21}'$ at their inputs. Depending on whether the logic value "0" or "1" is present at the input $b_6$ the selection switches K7a and K7b apply the provisional carry signals $CC_{21}'$ or $CC_{21}$ and $CC_{21}$ and $CC_{21}'$ respectively to the respective inputs $a_7$ and $b_7$ of the selection circuit K7. The signal $CC_{21}$ or $CC_{21}'$ at the input $b_7$ controls the selection switches K8a and K8b in the same way as described above. From the foregoing it follows that the provisional carry signals $CC_{24}$ and $CC_{24}'$ are available at the inputs $a_8$ and $b_8$ of the selection circuit K8 after $1 \times \tau_c + 3 \times \tau_s = 53$ nsec.; so that the carry signal $C_{24}$ is already available after 65 nsec. So the full adder circuit shown in Fig. 2 can be operated faster when the sub-circuit $SU2'$ of Fig. 3 is used in Fig. 2 and the carry signal $C_{12}$ is generated more quickly (15 nsec. more quickly). This faster generation of carry signal $C_{12}$ can be accomplished by using in Fig. 2 the full adder circuit $1$ of Fig. 1 instead of sub-circuit $SU1$, a logic value "0" being applied to the carry signal input for the signal $C_0$. The carry signal $C_{12}$ is then already available in Fig. 1 after $\approx 1 \times \tau_c + 3 \times \tau_s = 53$ nsec. (as the selection circuit S1 is always in the same state).

It should be noted that the sub-circuit $SU3$ of Fig. 2 can also be replaced by a circuit similar to that shown in Fig. 3, which again results in some gain in time for generating the sum signals $S_{36}$ to $S_{39}$. In addition, it should be noted that for assembling still larger binary numbers (for example 80 bit and more) it is advisable to introduce a third multiplexed level (K32'a, K32'b form the second level, K32a, b form the first level) between the look-ahead sub-circuits cl i (see fig. 4, i=32) and the full adders (A70—72), the third level (K32) being controlled by the carry signal $C_{39}$ generated in the sub-circuit $SU3$ (Fig. 2), so that all the carry signals of a higher significance (higher than 40) are already available after a single delay $\tau_s$ (12 nsec.). This results in it being possible to add together, for example two 80 bit numbers in approximately 150 nsec. It should be noted that then two further (third and fourth) selection switches K32'a, b must be provided in each selection circuit (K32 as shown in Fig. 4), the $a$-input and $b$-input of the selection circuit K32 being connected to the outputs of the respective selection switches (K32'a, b) and the $a$-input and $b$-input of the third and fourth selection switches (K32'a, b) being connected to the outputs of the selection switches K32a, K32b and K32b, K32a respectively. In the example illustrated by Fig. 4 the assumption is that the sub-circuits $SU1$, $SU2$, $SU3$, $SU4$ and $SU5$ (not shown) have respective "widths" of 12, 12, 15, 18 and 21 bits, so that the carry signals $C_{39}$ (12+12+15) generated in sub-circuit $SU3$ controls the third multiplex level (K32) of the sub-circuits $SU4$ and $SU5$ and the provisional carry signal $CC_{57}$ (12+12+15+18) generated in sub-circuit $SU4$ controls the second level (k32'a, b) in the sub-circuit $SU5$, the signal $CC_{57}$ being obtained from the b-input of the selection circuit K19 of the sub-circuit $SU4$ (the carry signal immediately above the 3$^{rd}$ level).

The circuits described in the foregoing are formed from full adders, carry look-ahead circuits and 1 out of 2 multiplex circuits, which are all circuits which are known per se and are preferably integrated on a semiconductor substrate, the resulting full adder circuit forming part of a more extensive circuit e.g. (a multiplier).

## Claims

1. A full adder circuit for adding together two n-bit binary numbers, this full adder circuit comprising a plurality of cascaded sub-circuits of a first type having a plurality of bit inputs for receiving groups of bit signals having significance progressing from $m$ to $k$, wherein m<k≤n, each sub-circuit of a first type comprising first (cla 12; cla 22...) and second (cla 11; cla 21...) sub-circuits of a second type and a selection circuit ($S_1$, $S_2$;...), the first and second sub-circuits of the second type respectively receiving the logic values "0" and "1" at a carry signal input $I_{11}$; $I_{12}$;...) and generating at a carry signal output ($CC_3$; $CC_3'$;...) a provisional carry signal having a significance k+1, these carry signal outputs being connected to inputs of the selection circuit a further input of which is connected to an output $CC_0$ of a preceding sub-circuit of the first type or a sub-circuit of the second type which are arranged in cascade with the relevant sub-circuit of the first type, at which output a carry signal having a first significance (m) is generated for selecting by means of the selection circuit a carry signal ($C_3$; $C_6$;...) having a higher significance ($k+1$) from the generated provisional carry signals and for applying the selected carry signal to a carry signal output of the sub-circuit of the first type, characterized in that the sub-circuits of the second type are carry look-ahead circuits outputs of which are connected to the carry signal inputs of the selection circuit whose further input is connected to the carry signal input of a single full adder (11; 12;...) for adding together two bits of the significance $m$.

2. A full adder circuit as claimed in Claim 1, characterized in that a carry look-ahead circuit comprises at least two look-ahead sub-circuits, the consecutive look-ahead sub-circuits receiving significance-sequential sub-groups (m to l, l+1 to k) from a group of bit signals (wherein $m < l \leq k$) for generating provisional carry signals with progressing significances, the selection means comprising a selection circuit for every two look-ahead sub-circuits producing provisional carry signals with the same significance, carry signal inputs of said selection circuit are connected to the outputs of the last-mentioned two look-ahead sub-circuits and an output of said selection circuit is connected to the carry signal input of a full adder for adding together two bits having (the same) associated significance, a carry signal of a first significance generated in a preceding sub-circuit of the first type or a sub-circuit of the second type being applied to the control input of each selection circuit in a sub-circuit of the first type for selecting a carry signal from the two provisional carry signals applied to the selection circuit.

3. A full adder circuit as claimed in Claim 2, characterized in that in a sub-circuit of the second type the look ahead sub-circuits are arranged in cascade.

4. A full adder circuit as claimed in Claim 2, characterized in that in a sub-circuit of the first type the inputs of the pairs of look-ahead sub-circuits which generate provisional carry signals of the same significance receive the logic values "0" and "1", respectively, outputs of the two look-ahead sub-circuits generating provisional carry signals of the same significance are connected to inputs of two selection switches (K32a, b) the outputs of which are connected to the carry signal inputs of the selection circuit, and control inputs of the first and second selection switches are connected, for the purpose of choosing from the two provisional carry signals applied thereto, to one of the carry signal inputs of the selection circuit associated with the two preceding look-ahead sub-circuits.

5. A full adder circuit as claimed in Claim 4, characterized in that the sub-circuits of the first type are divided into groups, a carry signal of the highest significance generated from a first group of sub-signals being used as a control signal for the selection circuits in the sub-circuits of a second group for choosing the carry signals of a higher significance from the provisional carry signals, there being arranged between each selection circuit and the two selection switches third and fourth selection switches (k32'a, b) whose outputs are connected to the inputs of the selection circuit and a first and a second input of the third selection switch, being connected to the outputs of the first and second selection switches respectively and a first and second input of the fourth selection switch being connected to the outputs of the second and first selection switches respectively, the control inputs of the third and fourth selection switches in a sub-circuit of the first type being connected to an input of a selection circuit of a preceding sub-circuit of the first type which is arranged in cascade with the sub-circuit of the first type, provisional carry signals of the highest significance prevailing in the sub-circuit of the first type being applied to said selection circuit.

6. A circuit integrated on a semiconductor substrate, comprising a full adder circuit as claimed in any of the preceding Claims.

**Patentansprüche**

1. Volladdierer zum Aufzählen von zwei n-Bit-Binärzahlen, wobei der Volladdierer eine Anzahl kaskadengeschalteter Unterschaltungen von einem ersten Typ mit einer Anzahl von Biteingängen zum Empfangen von Bitsignalgruppen mit sich vergrößernden Wertigkeiten von m nach k enthält, worin $m < k \leq n$ ist, wobei jede Unterschaltung von einem ersten Typ erste (cla12; cla22...) une zweite Unterschaltungen (cla11; cla21...) von einem zweiten Typ sowie eine Wählschaltung (S1; S2;...) enthält, die ersten und zweiten Unterschaltungen vom zweiten Typ die logischen Werte "0" bzw. "1" an einem Übertragssignaleingang (I11; I12;...) empfangen und an einem Übertragssignal (CC3; CC'3;...) ein provisorisches Übertragssignal mit einer Wertigkeit k+1 erzeugen, diese Übertragssignalausgänge mit Eingängen der Wahlschaltung verbunden sind, von der ein weiterer Eingang an einen Ausgang (CCO) einer vorangehenden Unterschaltung vom ersten Typ oder einer Unterschaltung vom zweiten Typ angeschlossen ist, die mit der betreffenden Schaltung vom ersten Typ in Kaskade geschaltet sind, an welchem Ausgang ein Übertragssignal mit einer ersten Wertigkeit (m) zum Wählen eines Übertragssignals (C3; C6;...) mit einer höheren Wertigkeit (k+1) mittels der Wählschaltung aus den erzeugten provisorischen Übertragssignalen und zum Anlegen des ausgewählten Übertragssignals an einen Übertragssignalausgang der Unterschaltung vom ersten Typ erzeugt wird, dadurch gekennzeichnet, daß die Unterschaltungen vom zweiten Typ Übertragvorgriffschaltungen sind, von denen Ausgänge mit den Übertragssignaleingängen der Wählschaltung verbunden sind, deren weiterer Eingang mit dem Übertragssignaleingang eines einzelnen Volladdierers (11; 12;...) zum Aufzählen von zwei Bits mit der Wertigkeit m verbunden ist.

2. Volladdierer nach Anspruch 1, dadurch gekennzeichnet, daß eine Übertragvorgriffschaltung wenigstens zwei Vorgriffunterschaltungen enthält, wobei die aufeinanderfolgenden Vorgriffunterschaltungen aus einer Bitsignalgruppe (worin m<l≤k ist) wertigkeitssequentielle Untergruppen (m nach l, l+1 nach k) zum Erzeugen provisorischer Übertragssignale mit progressiven Wertigkeiten empfangen, die Wählmittel eine Wählschaltung für jede zwei Vorgriffunterschaltungen zum Erzeugen provisorischer Übertragssignale mit derselben Wertigkeit enthalten, Übertragssignaleingänge der Wählschaltung mit den Ausgängen der letztgenannten zwei Vorgriffunterschaltungen verbunden sind und ein Ausgang der Wählschaltung an den Übertragssignaleingang eines Volladdierers zum Aufzählen von zwei Bits mit (derselben) zugeordneten Wertigkeit angeschlossen ist, ein in einer vorangehenden Unterschaltung vom ersten Typ oder in einer Unterschaltung vom zweiten Typ erzeugtes Übertragssignal einer ersten Wertigkeit an den Steuereingang jeder Wählschaltung in einer Unterschaltung vom ersten Typ zum Wählen eines Übertragssignals aus den zwei der Wählschaltung zugeführten provisorischen Übertragssignalen gelegt wird.

3. Volladdierer nach Anspruch 2, dadurch gekennzeichnet, daß in einer Unterschaltung vom zweiten Typ die Vorgriffunterschaltungen in Kaskade geschaltet sind.

4. Volladdierer nach Anspruch 2, dadurch gekennzeichnet, daß in einer Unterschaltung vom ersten Typ die Eingänge des Paares von Vorgriffunterschaltungen, die provisorische Übertragssignale mit derselben Wertigkeit erzeugen, die logischen Werte "0" bzw. "1" empfangen, wobei provisorische Übertragssignale mit derselben Wertigkeit erzeugende Ausgänge der beiden Vorgriffunterschaltungen an Eingänge von zwei Wählschaltern (K32a, b) angeschlossen sind, deren Ausgänge an die Übertragssignaleingänge der Wählschaltung angeschlossen sind, und Steuereingänge der ersten und zweiten Wählschalter zum Treffen einer Wahl aus den zwei provisorischen daran gelegten Übertragssignale an einen der Übertragssignaleingänge der Wählschaltung angeschlossen sind, die den beiden vorangehenden Vorgriffunterschaltungen zugeordnet ist.

5. Volladdierer nach Anspruch 4, dadurch gekennzeichnet, daß die Unterschaltungen vom ersten Typ in Gruppen verteilt werden, wobei ein Übertragssignal mit der höchsten Wertigkeit, das aus einer ersten Untersignalgruppe erzeugt wird, als Steuersignal für die Wählschaltungen in den Unterschaltungen einer zweiten Gruppe zum Wählen der Übertragssignale mit einer höheren Wertigkeit aus den provisorischen Übertragssignalen benutzt wird, wobei zwischen jeder Wählschaltung und den beiden Wählschaltern dritte und vierte Wählschalter (K32'a, b) angeordnet sind, deren Ausgänge mit den Eingänge der Wählschaltung verbunden sind, und ein erster und ein zweiter Eingang des dritten Wählschalters an die Ausgänge der ersten bzw. zweiten Wählschalter und ein erster und ein zweiter Eingang des vierten Wählschalters an die Ausgänge der zweiten bzw. ersten Wählschalter angeschlossen sind, und die Steuereingänge der dritten und vierten Wählschalter in einer Unterschaltung vom ersten Typ an einen Eingang einer Wählschaltung einer vorangehenden Unterschaltung vom ersten Typ angeschlossen ist, die mit der Unterschaltung vom ersten Typ in Kaskade geschaltet ist, wobei provisorische Übertragssignale mit höchster Wertigkeit, die in der Unterschaltung vom ersten Typ vorherrschen, an die Wählschaltung gelegt werden.

6. Auf einem Halbleitersubstrat integrierte Schaltung mit einem Volladdierer nach einem oder mehreren der vorangehenden Ansprüche.

## Revendications

1. Circuit additionneur complet destiné à additionner deux nombres binaires de n bits, ce circuit additionneur complet comprenant plusieurs sous-circuits en cascade d'un premier type comportant plusieurs entrées de bits destinées à recevoir des groupes de signaux de bits présentant des poids qui vont en croissant de $m$ à $k$, où m<k≤n, chaque sous-circuit d'un premier type comprenant des premiers (cla 12; cla 22;...) et des seconds (cla 11; cla 21;...) sous-circuits d'un second type et un circuit de sélection (S1; S2), les premiers et les seconds sous-circuits du second type recevant respectivement les valeurs logiques "0" et "1" à une entrée de signal de report ($l_1 1$; $l_1 2$;...) et produisant, à une sortie de signal de report ($CC_3$; $CC_3'$;...), un signal de report provisoire d'un poids k+1, ces sorties de signaux de report étant connectées à des entrées du circuit de sélection, dont une autre entrée est connectée à une sortie ($C_0$) d'un sous-circuit précédent du premier type ou d'un sous-circuit du second type qui sont disposés en cascade avec les sous-circuit concerné du premier type, cette sortie présentant un signal de report ayant un premier poids (m) qui est produit pour sélectionner, à l'aide du circuit de sélection, un signal de report ($C_3$; $C_6$;...) d'un poids élevé (k+1) à partir des signaux de report provisoires produits et pour appliquer le signal de report sélectionné à une sortie de signal de report du sous-circuit du premier type, caractérisé en ce que les sous-circuits du second type sont des circuits d'anticipation de report dont des sorties sont connectées aux entrées de signaux de report du circuit de sélection dont une autre entrée est connectée à l'entrée de signal de report d'un additionneur complet simple (11; 12;...) pour additionner deux bits du poids $m$.

2. Circuit additionneur complet suivant la revendication 1, caractérisé en ce qu'un circuit d'anticipation de report comprend au moins deux sous-circuits d'anticipation, les sous-circuits d'anticipation consécutifs recevant des sous-groupes séquentiels en poids (m à l, l+1 à k) d'un groupe de signaux de bits (où m<l≤k) pour produire des signaux de report provisoires d'un poids croissant, les moyens de sélection comprenant un circuit de sélection pour chaque paire de sous-circuits d'anticipation produisant des signaux de report provisoires de même poids, des entrées de signaux de report du circuit de sélection étant connectées aux sorties des deux sous-circuits d'anticipation mentionnés en dernier lieu et une sortie du circuit de sélection étant connectée à une entrée de signal de report d'un additionneur complet pour additionner deux bits

présentant le même poids associé, un signal de report d'un premier poids produit dans un sous-circuit du premier type précédent ou dans un sous-circuit du second type étant appliqué à l'entrée de commande de chaque circuit de sélection dans un sous-circuit du premier type, pour sélectionner un signal de report entre les deux signaux de report provisoires appliqués au circuit de sélection.

3. Circuit additionneur complet suivant la revendication 2, caractérisé en ce que dans un sous-circuit du second type, les sous-circuits d'anticipation sont disposés en cascade.

4. Circuit additionneur complet suivant la revendication 2, caractérisé en ce que dans un sous-circuit du premier type, les entrées des paires de sous-circuits d'anticipation qui produisent des signaux de report provisoires du même poids reçoivent respectivement les valeurs logiques "0" et "1" des sorties des deux sous-circuits d'anticipation qui produisent des signaux de report provisoires du même poids sont connectées à des entrées de deux commutateurs de sélection (K32a, b) dont les sorties sont connectées aux entrées de signaux de report du circuit de sélection, et des entrées de commande du premier et du second commutateur de sélection sont connectées, en vue d'effectuer un choix entre les deux signaux de report provisoires qui y sont appliqués, à une des entrées de signaux de report du circuit de sélection associé aux deux sous-circuits d'anticipation précédents.

5. Circuit additionneur complet suivant la revendication 4, caractérisé en ce que les sous-circuits du premier type sont divisés en groupes, le signal de report du poids le plus élevé produit à partir d'un premier groupe de sous-signaux étant utilisé comme signal de commande pour les circuits de sélection dans les sous-circuits d'un second groupe, en vue de choisir les signaux de report d'un poids supérieur parmi les signaux de report provisoires, étant entendu qu'entre chaque circuit de sélection et les deux commutateurs de sélection sont disposés un troisième et un quatrième commutateur de sélection (K32'a, b) dont les sorties sont connectées aux entrées du circuit de sélection, une première et une seconde entrée du troisième commutateur de sélection étant connectées respectivement aux sorties du premier et du deuxième commutateur de sélection, tandis qu'une première et une seconde entrée du quatrième commutateur de sélection sont connectées respectivement aux sorties du premier et du deuxième commutateur de sélection, les entrées de commande du troisième et du quatrième commutateur de sélection dans un sous-circuit du premier type étant connectées à une entrée d'un circuit de sélection d'un sous-circuit du premier type précédent qui est disposé en cascade avec le sous-circuit du premier type, les signaux de report provisoires du poids le plus fort qui existent dans le sous-circuit du premier type étant appliqués au circuit de sélection.

6. Circuit intégré sur un substrat semi-conducteur comprenant un circuit additionneur complet suivant l'une quelconque des revendications précédentes.

**FIG.1**

**FIG.3**

SU 2'

**FIG.4**

FIG.2